# EUROPÄISCHE PATENTSCHRIFT

(11) **EP 3 153 269 B1**
(45) Veröffentlichungstag und Bekanntmachung des Hinweises auf die Patenterteilung: **29.01.2020**
(21) Anmeldenummer: 16192583.9
(22) Anmeldetag: 06.10.2016
(51) Int. Cl.: B23K 1/00, B23P 6/00

(54) **REPARATUR VERSCHLISSENER BAUTEILOBERFLÄCHEN**
WORN WORKPIECE SURFACES REPAIR
RÉPARATION DE SURFACES D'OBJETS USÉES

(30) Priorität: 08.10.2015 DE 102015219512
(43) Veröffentlichungstag der Anmeldung: 12.04.2017
(73) Patentinhaber: MTU Aero Engines AG, 80995 München (DE)
(72) Erfinder: Daniels, Bernd, 82194 Gröbenzell (DE); Hillen, Michael, 82140 Olching (DE); Werner, André, 09350 Lichtenstein/Sa. (DE)

(56) Entgegenhaltungen:
- EP-A1- 2 275 220
- EP-A1- 2 522 452
- EP-A2- 1 563 937
- DE-A1- 4 112 218
- DE-A1-102011 087 158
- US-A1- 2003 183 529
- US-B1- 6 670 049

## Beschreibung

### HINTERGRUND DER ERFINDUNG

### GEBIET DER ERFINDUNG

Die vorliegende Erfindung betrifft ein Verfahren zur Reparatur von durch Verschleiß beschädigten Bauteilen einer Strömungsmaschine gemäß dem Oberbegriff des Anspruchs 1 sowie entsprechend reparierte Bauteile einer Strömungsmaschine mit einer Reparaturschicht gemäß dem Oberbegriff des Anspruchs 12.

### STAND DER TECHNIK

Bei Strömungsmaschinen, wie stationären Gasturbinen oder Flugzeugtriebwerken, wird Verbrennungsluft angesaugt und komprimiert und in einer Brennkammer mit Brennstoff verbrannt, wobei durch die ausströmenden Verbrennungsgase Rotoren angetrieben werden. Bauteile einer Strömungsmaschine, wie beispielsweise Begrenzungselemente für einen Strömungskanal für das Verbrennungsgas unterliegen auf Grund der hohen thermischen, mechanischen und korrosiven Belastungen im Betrieb unter Umständen so starken Veränderungen, dass sie nach einer bestimmten Betriebszeit den Anforderungen nicht mehr genügen und ausgetauscht bzw. repariert werden müssen. Beispielsweise können derartige Begrenzungselemente von Strömungskanälen in den Überlappungsbereichen, in denen sie mit benachbarten Begrenzungselementen zusammengefügt sind, durch gegenseitige Bewegung einem hohen Verschleiß unterliegen, der zu einer Abweichung der Bauteile von der erforderlichen Bauteilgeometrie führt, sodass ein Austausch oder eine Reparatur dieser Bauteile erforderlich werden kann.

Aus der EP 1 563 937 A2, die ein Verfahren gemäß dem Oberbegriff des Anspruchs 1 und ein Bauteil gemäß dem Oberbegriff des Anspruchs 12 offenbart, ist es bereits bekannt, Bauteile von Turbomaschinen bzw. Strömungsmaschinen, die einem hohen Verschleiß unterliegen, durch Auflöten von Reparaturmaterial zu reparieren. Allerdings weist das in der EP 1 563 937 A2 verwendete Kobaltbasislot eine hohe Löttemperatur auf, sodass die Aufbringung des Reparaturmaterials erschwert ist. Zudem haben sich die im Stand der Technik bekannten Reparaturschichten als nicht sehr beständig erwiesen.

Aus der europäischen Patentanmeldung EP 2 275 220 A1 ist ein Verfahren zur Panzerung von Bauteilen aus einem TiAl-Basiswerkstoff bei der Neuherstellung der Bauteile bekannt. Bei dem Verfahren wird auf dem Basiswerkstoff des Bauteils eine Zwischenschicht aus einer Ni-Legierung aufgebracht. Auf dieser Zwischenschicht wird eine Panzerung vorgesehen.

Aus der europäischen Patentanmeldung EP 1 563 937 A2 ist ein Verfahren zum Reparieren verschlissener Oberflächen bekannt, welche mit hohen Drücken in Berührung kommen. Bei dem Verfahren wird ein Oberflächenbereich der abgenutzten Oberfläche entfernt, um eine Reparaturoberfläche auf dem Bauteil zu definieren. Ein Hartlötband wird auf die Reparaturoberfläche aufgetragen. Anschließend wird eine Wärmebehandlung durchgeführt, um eine Diffusion des Hartlötbandes zu bewirken. Die aufgebaute Oberfläche wird im Anschluss maschinell bearbeitet, um eine verschleißfeste Beschichtung auf dem Bauteil zu definieren.

### OFFENBARUNG DER ERFINDUNG

### AUFGABE DER ERFINDUNG

Es ist deshalb Aufgabe der vorliegenden Erfindung ein Reparaturverfahren und eine Reparaturschicht bzw. ein entsprechendes Bauteil mit einer Reparaturschicht anzugeben, welche eine effiziente Aufbringung der Reparaturschicht ermöglichen, wobei die Reparaturschicht eine möglichst lange Lebensdauer aufweisen soll.

### TECHNISCHE LÖSUNG

Diese Aufgabe wird gelöst mit einem Verfahren mit den Merkmalen des Anspruchs 1 sowie einem Bauteil mit den Merkmalen des Anspruchs 12. Vorteilhafte Ausgestaltungen sind Gegenstand der abhängigen Ansprüche.

Die vorliegende Erfindung schlägt vor, als Reparaturschicht ein Nickelbasislot mit eingelagerten Hartstoffpartikeln vorzusehen, wobei die Hartstoffpartikel durch eine Hartlegierungen auf Basis von Kobalt oder Nickel gebildet sind. Derartige Reparaturschichten können in einfacher Weise dadurch aufgebracht werden, dass zunächst eine glatte und saubere Oberfläche für die Aufbringung der Reparaturschicht geschaffen wird, wonach das Nickelbasislot mit den Hartstoffpartikeln auf der entsprechenden Oberfläche aufgebracht wird und anschließend bei einer Wärmebehandlung des Bauteils mit dem aufgebrachten Nickelbasislot und den Hartstoffpartikeln unter Vakuumbedingungen die Reparaturschicht auf dem Bauteil aufgelötet wird. Durch die im Nickelbasislot eingelagerten Hartstoffpartikel kann eine hohe Lebensdauer der Reparaturschicht erreicht werden.

Somit schlägt die Erfindung vor eine Verschleißschutzbeschichtung, ähnlich derjenigen wie sie in der US 6,811,898 B2 offenbart ist, als Reparaturschicht vorzusehen, wobei die Reparaturschicht für den Einsatzzweck modifiziert ist und insbesondere Hartstoffpartikel verwendet, die an den Einsatzzweck angepasst sind und ein homogenes Eigenschaftsprofil des Bauteils auch im Randbereich, in dem die Reparaturschicht einen ursprünglichen Bauteilbereich ersetzt, zu ermöglichen.

Bei dem Verfahren zur Reparatur von durch Verschleiß beschädigten Bauteilen einer Strömungsmaschine wird zur Vorbereitung der zu reparierenden Fläche, also zur Vorbereitung der Fläche, auf der die Reparaturschicht angeordnet werden soll, an dieser Material abgetragen, insbesondere durch mechanische, spanabhebende Bearbeitung, wie Schleifen oder Fräsen, um eine saubere und definierte Oberfläche zu bilden, auf der die Reparaturschicht aufgebracht werden kann.

Vor dem Aufbringen der Reparaturschicht in Form eines Nickelbasislots mit eingelagerten Hartstoffpartikeln kann die Oberfläche, auf der die Reparaturschicht aufgebracht werden soll, mit Siliziumkarbidpartikeln und/oder Nickelpartikeln bestrahlt werden, um die Haftung des Nickelbasislots zu verbessern. Alternativ oder zusätzlich kann eine galvanische Nickelschicht abgeschieden werden.

Der Grundwerkstoff, auf dem die Reparaturschicht aufgebracht werden soll, kann durch Ni - oder Co - Basislegierungen gebildet werden, bei denen also Ni oder Co den Hauptlegierungsbestandteil bilden. Insbesondere kann es sich um Superlegierungen aus diesen Hauptlegierungsbestandteilen, die Einsatztemperaturen über 50%, insbesondere über 80 oder 90 % ihrer Schmelztemperatur erreichen und beispielsweise einkristallin ausgebildet sein können.

Das Nickelbasislot kann in Form eines Bandes oder einer Folie aufgebracht werden, wobei das verwendet Lot - Band (Lot - Paste) bzw. eine entsprechende Lot - Folie flexibel ausgestaltet sein kann, um eine vollflächige Anlage des Lots an die Oberfläche des zu reparierenden Bauteils zu gewährleisten.

Das Lot - Band bzw. die Lot - Folie kann mehrschichtig bzw. mehrlagig und insbesondere zweilagig ausgebildet sein, wobei in einer äußeren Lage der Anteil der eingelagerten Hartstoffpartikel größer sein kann als in einer inneren Lage, die am zu reparierenden Bauteil anliegt. Insbesondere kann in einer inneren Lage, die an dem zu reparierenden Bauteil angeordnet werden soll, auf die Einlagerung von Hartstoffpartikeln ganz verzichtet werden, sodass dort im Wesentlichen das Nickelbasislot vorliegt. Auch dadurch kann bewirkt werden, dass durch die Reparaturschicht das Eigenschaftsprofil des zu reparierenden Bauteils insbesondere im Randbereich nicht zu stark verändert wird.

Die äußere Lage eines entsprechenden Lot - Bands oder einer Lot - Folie kann 50 bis 30 Gew.%, vorzugsweise 45 bis 35 Gew.% und insbesondere ca. 40 Gew.% Hartstoffpartikel umfassen.

Das Nickelbasislot besteht im Wesentlichen aus Nickel, welches den Hauptbestandteil ausmacht. Daneben können weitere chemische Element zulegiert sein, wie Chrom, Silicium und/oder Bor.

Das Lot - Band bzw. die Lot - Folie können über Bindemittel oder eine Lot - Paste auf der zu reparierenden Fläche aufgebracht werden. Hierzu kann eine Lot - Paste verwendet werden, die dasselbe Lot aufweist, wie das Lot - Band bzw. die Lot - Folie. Insbesondere kann ein Lot - Band oder eine Lot - Folie mit einer entsprechenden Lot - Paste umgeben werden, sodass an den Rändern des Lot - Bandes oder der Lot - Folie Lot - Paste angeordnet ist, um einen glatten Übergang zwischen der Reparaturschicht und dem umgebendem Bauteil zu ermöglichen.

Um zu vermeiden, dass Lot während des Lötens in umgebende Bereiche des Bauteils fließen kann, kann um das aufgebrachte Lot auch eine Lotsperre vorgesehen werden.

Die Wärmebehandlung zur Durchführung des Lotprozesses kann im Temperaturbereich von 1150°C bis 1200°C, insbesondere von 1170°C bis 1180°C für 10 bis 25 Minuten, insbesondere 15 bis 20 Minuten durchgeführt werden.

Vor der Wärmebehandlung kann ein Trocknungsprozess vorgeschaltet werden, bei dem das aufgebrachte Lot mit den Hartstoffpartikeln bei 50°C bis 80°C, vorzugsweise 60°C bis 70°C an Luft getrocknet wird.

Der Aufheizvorgang zum Aufheizen auf die Löttemperatur kann dagegen ebenso wie die Wärmebehandlung bei der Löttemperatur bereits unter Vakuumbedingungen stattfinden, wobei der Druck im Bereich von ≤ 10⁻³ mbar, vorzugsweise ≤ 10⁻⁴ mbar liegen kann.

Der Aufheizvorgang auf die Löttemperatur kann kontinuierlich mit konstanter oder variierender Aufheizgeschwindigkeit durchgeführt werden, wobei die Aufheizgeschwindigkeit im Bereich von 5°C pro Minute bis 30°C pro Minute und insbesondere im Bereich von 10°C pro Minute bis 20°C pro Minute gewählt werden kann.

Alternativ oder zusätzlich kann das Bauteil mit dem aufgebrachten Reparaturmaterial während des Aufheizvorgangs bei einer oder mehreren Zwischentemperaturen auch für eine bestimmte Zeit gehalten (ausgelagert) werden, um dem Reparaturmaterial genügend Zeit beispielsweise für das Ausgasen von Bindemittel zu geben. So können Zwischenauslagerungen im Temperaturbereich von 400°C bis 1100 C, beispielsweise bei 450°C, 600°C und/oder 1050°C für eine Zeitdauer von 5 bis 40 Minuten, insbesondere 10 bis 30 Minuten durchgeführt werden.

Die Hartlegierungen für die Hartstoffpartikel können Legierungen auf der Basis von Kobalt oder Nickel sein und insbesondere Co - Mo - Cr - Si - Legierungen sein. Derartige Legierungen umfassen die angegebenen chemischen Elemente mit in der Reihenfolge der Aufzählung abnehmendem Gehalt, wobei zusätzliche Legierungsbestandteile in geringeren Mengen enthalten sein können und auch einzelne Elemente weggelassen werden können.

### KURZBESCHREIBUNG DER FIGUREN

Die beigefügten Zeichnungen zeigen in rein schematischer Weise in
- Fig. 1: eine Draufsicht auf ein Begrenzungselement eines Strömungskanals in einer Strömungsmaschine,
- Fig. 2: einen teilweisen Querschnitt durch ein Bauteil nach Vorbereitung der zu reparierenden Oberfläche,
- Fig. 3: eine teilweise Schnittansicht eines Bauteils nach Aufbringung eines Lot-Bands gemäß der vorliegenden Erfindung,
- Fig. 4: eine teilweise Schnittansicht eines Bauteils nach Aufbringung eines Lot-Bands gemäß der vorliegenden Erfindung gemäß einer zweiten Ausführungsform, und in
- Fig. 5: eine teilweise Schnittansicht des Bauteils aus Figur 4 nach Fertigstellung der Reparaturschicht.

### AUSFÜHRUNGSBEISPIELE

Weitere Vorteile, Kennzeichen und Merkmale der vorliegenden Erfindung werden bei der nachfolgenden detaillierten Beschreibung von Ausführungsbeispielen deutlich. Allerdings ist die Erfindung nicht auf diese Ausführungsbeispiele beschränkt.

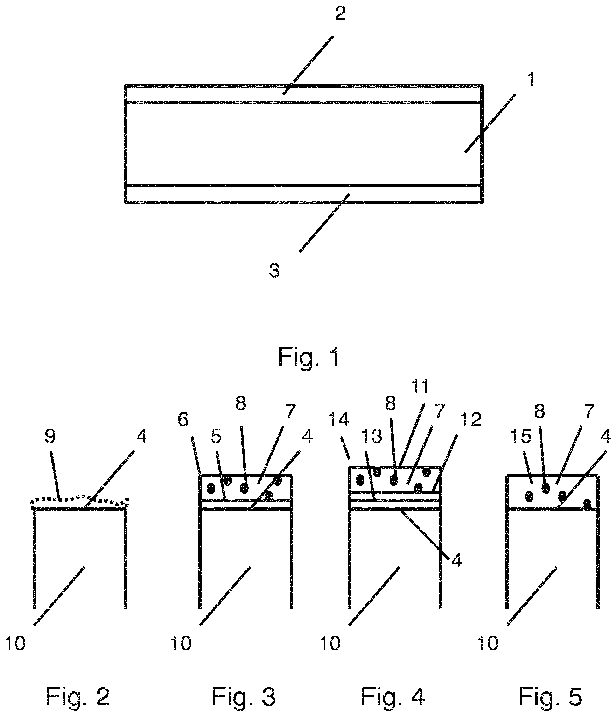

Die Figur 1 zeigt eine Draufsicht auf ein Begrenzungselement 1 eines Strömungskanals, wie beispielsweise ein Bauteil aus dem Turbine - Center - Frame (TCF) welches innerhalb des TCF einen Teil des Verbindungsgaskanals zwischen Hochdruckturbine und Niederdruckturbine bildet. Mehrere Begrenzungselemente 1 können hierbei nebeneinander angeordnet sein, wobei sich die Ränder 2 und 3 jeweils mit den benachbarten Begrenzungselementen 1 überlappen und durch eine gegenseitige Bewegung verschleißen. Entsprechend müssen die Begrenzungselemente ersetzt oder repariert werden, wenn der Verschleiß an den Rändern 2, 3 eine zu starke Abweichung von der vorgegebenen Bauteilgeometrie verursacht.

Die Figur 2 zeigt schematisch in einem teilweisen Schnitt durch ein Bauteil 10 die Situation vor der Reparatur des Bauteils 10 und nach einem ersten Bearbeitungsschritt gemäß einer Ausführungsform des erfindungsgemäßen Verfahrens zur Reparatur des Bauteils 10.

Mit der gepunkteten Linie ist in Fig. 2 die verschlissene Oberfläche 9 dargestellt, die auf Grund des Materialverschleißes eine unebene Topographie aufweist. Um für die Reparatur eine definierte Oberfläche zu haben, ist in einem ersten Bearbeitungsschritt ein Teil des Bauteils 10 abgetragen worden, der sich zwischen der verschlissenen Oberfläche 9 und einer glatten und ebenen Oberfläche 4 befunden hat, auf der die erfindungsgemäße Reparaturschicht aufgetragen wird. Der Materialabtrag zwischen der verschlissenen Oberfläche 9 und der Oberfläche 4, auf der die Reparaturschicht abgeschieden wird, kann durch verschiedene Verfahren zum Materialabtrag erzielt werden, beispielsweise durch mechanischen, spanabhebenden Materialabtrag, insbesondere durch Schleifen.

Die Figur 3 zeigt wie in einem weiteren Bearbeitungsschritt ein Lot - Band 6 (Lot - Tape) auf der Oberfläche 4 des Bauteils 1 aufgebracht ist. Das Lot - Tape 6 ist über eine Schicht mit einer Lot - Paste 5 auf der Oberfläche 4 des Bauteils 10 angeordnet. Das Lot - Band 6 ist aus einem Nickelbasislot 7 aus Ni - Legierungspulver mit Bindemittel und mit eingelagerten Hartstoffpartikeln 8, auf Basis von Kobalt oder Nickel, gebildet. Das Verhältnis zwischen Nickelbasislot und Hartstoffpartikeln kann im Verhältnis von 60 % zu 40 % bezogen auf das Gewicht sein.

Nach einer anderen Ausführungsform, die in Figur 4 dargestellt ist, kann ein Lot - Band 14 über ein Bindemittel 13 auf der Oberfläche 4 des zu reparierenden Bauteils 10 angeordnet werden. Das Lot - Band 14 unterscheidet sich von dem Lot - Band 6 der vorangegangenen Ausführungsform dadurch, dass es zweilagig ausgebildet ist und zwar mit einer äußeren Lage 11, die wiederum eine Mischung aus einem Nickelbasislot 7 und eingelagerten Hartstoffpartikeln 8 darstellt, während die innere Lage 12 lediglich ein Nickelbasislot aufweist.

Sowohl bei der Ausführungsform gemäß der Figur 3 als auch bei der Ausführungsform gemäß der Figur 4 werden die entsprechenden Bauteile 10 nach dem Aufbringen des Nickelbasislots und der zumindest teilweise eingelagerten Hartstoffpartikel einer Wärmebehandlung unterzogen, um den Lötvorgang durchzuführen. Vor der Wärmebehandlung kann zunächst ein Trocknungsschritt durchgeführt werden, bei dem die Bauteile 10 bei einer Temperatur von 60° C für eine Stunde an Luftatmosphäre getrocknet werden.

Nach dem Trocknen können die Bauteile 10 in einem Vakuumofen, bei dem ein Vakuum von mindestens 1^{∗}10⁻³ mbar, vorzugsweise kleiner oder gleich 1^{∗}10⁻⁴ mbar einstellbar ist, auf eine Temperatur von 1180° C aufgeheizt ist, wobei die Aufheizrate zwischen 5°C und 20°C pro Minute liegen kann. Die Aufheizrate sollte zumindest so klein gewählt werden, dass ein Vakuum von ≤ 10⁻³ mbar aufrechterhalten werden kann.

Statt eines kontinuierlichen Aufheizens mit einer konstanten oder variabel sich verändernden Aufheizrate kann auch ein stufenweises Aufheizen durchgeführt werden, bei dem die Bauteile zusammen mit dem aufgebrauchten Lot bei bestimmten Temperaturstufen für eine bestimmte Zeit der Temperatur ausgesetzt, also ausgelagert werden. Beispielsweise kann nach Erreichen der Temperatur von 450° C +/- 14° C eine Auslagerung bei dieser Temperatur für 30 Minuten erfolgen. Nach einer weiteren Aufheizung und mit einer Aufheizgeschwindigkeit von 20° C pro Minute auf 600° C +/- 14° C kann diese Temperatur für 10 Minuten gehalten werden. Nach einem weiteren Aufheizen auf 1050° C +/- 14° C kann das entsprechende Bauteil wiederum für 10 Minuten bei dieser Temperatur gehalten werden, während schließlich die Endtemperatur von 1180° C +/- 5° C für 15 Minuten gehalten werden kann, um den Lötvorgang abzuschließen. Von der Löttemperatur 1180° C kann dann schnell unter Zugabe eines Inertgases, beispielsweise durch Zugabe von Argon, bis auf Raumtemperatur abgekühlt werden.

Nach der Durchführung der Wärmebehandlung befindet sich eine Reparaturschicht 15 auf dem Bauteil 1, wie dies in der Figur 5 schematisch dargestellt ist. In der Reparaturschicht 15 sind in einer Matrix aus einem Nickelbasislot 7 Hartstoffpartikel 8 eingelagert, die zu einer erhöhten Verschleißbeständigkeit der Reparaturschicht beitragen. Die Reparaturschicht ist von ihren Dimensionen so gewählt, dass das reparierte Bauteil 10 nunmehr wieder den vorgegebenen Bauteilgeometrien entspricht, insbesondere nach einer Endbearbeitung, beispielsweise durch Schleifen. Um den Schrumpf des Reparaturmaterials, also des Nickelbasislots und der darin eingelagerten Hartstoffpartikeln während der Wärmebehandlung zu berücksichtigen, kann das aufgebrachte Material beispielsweise in Form eines Lot - Tapes 6 oder 14 entsprechend größer dimensioniert werden.

Um die Benetzung durch das Lot zu verbessern kann die Oberfläche 4 des Bauteils 1 vor dem Aufbringen des Nickelbasislots mit Siliziumkarbid - Partikeln oder mit Nickelpulver gestrahlt werden oder es kann eine galvanische Nickelbeschichtung durchgeführt werden.

Die Hartstoffpartikel umfassen Hartlegierungen, wie Kobalt oder Nickel - Legierungen. Insbesondere können verschiedene Hartstoffpartikel miteinander gemischt werden, sodass nicht nur eine Art von Hartstoffpartikeln in der Reparaturschicht vorliegen kann.

Obwohl die vorliegende Erfindung anhand der Ausführungsbeispiele detailliert beschrieben worden ist, ist für den Fachmann selbstverständlich, dass die Erfindung nicht auf diese Ausführungsbeispiele beschränkt ist, sondern dass vielmehr Abwandlungen in der Weise möglich sind, dass einzelne Merkmale weggelassen werden oder andersartige Kombinationen von Merkmalen verwirklicht werden können, sofern der Schutzbereich der beigefügten Ansprüche nicht verlassen wird. Insbesondere umfasst die Offenbarung der vorliegenden Erfindung sämtliche Kombinationen der vorgestellten Einzelmerkmale.

### BEZUGSZEICHENLISTE

- 1: Begrenzungselement
- 2: Rand
- 3: Rand
- 4: Oberfläche
- 5: Lot - Paste
- 6: Lot - Band
- 7: Nickelbasislot
- 8: Hartstoffpartikel
- 9: verschlissene Oberfläche
- 10: Bauteil
- 11: äußere Lage
- 12: innere Lage
- 13: Bindemittel
- 14: Lot - Band
- 15: Reparaturschicht

## Patentansprüche

1. Verfahren zur Reparatur von durch Verschleiß beschädigten Bauteilen (1,10) einer Strömungsmaschine, insbesondere von Elementen einer Strömungskanalbegrenzung, mit den folgenden Verfahrensschritten:
- Vorbereitung der zu reparierenden Fläche, um eine glatte und saubere Oberfläche (4) bereitzustellen, wobei bei der Vorbereitung der zu reparierenden Fläche an der zu reparierende Fläche Material abgetragen wird, insbesondere durch mechanische, spanabhebende Bearbeitung,
- Aufbringen eines Ni - Basislots (7) mit einem Anteil an Hartstoffpartikeln (8) auf die Oberfläche (4) zur Ausbildung einer Reparaturschicht (15),
- Wärmebehandlung des Bauteils zum Löten der Reparaturschicht auf das Bauteil unter Vakuumbedingungen, **dadurch gekennzeichnet dass** die Hartstoffpartikel Hartlegierungen auf Basis von Kobalt oder Nickel umfassen.

2. Verfahren nach einem der vorhergehenden Ansprüche,
**dadurch gekennzeichnet, dass**
bei der Vorbereitung der zu reparierenden Fläche insbesondere nach einem Materialabtrag eine Bestrahlung mit Siliciumkarbid - Partikeln und/oder Nickel - Partikeln und/oder eine galvanische Nickelbeschichtung erfolgt.

3. Verfahren nach einem der vorhergehenden Ansprüche,
**dadurch gekennzeichnet, dass**
beim Aufbringen des Ni - Basislots (7) das Lot in Form eines Bandes (6,14) oder einer Folie aufgebracht wird.

4. Verfahren nach Anspruch 3,
**dadurch gekennzeichnet, dass**
das Lot - Band (6,14) oder die Lot - Folie flexibel sind und/oder mehrschichtig ausgebildet sind.

5. Verfahren nach einem der vorhergehenden Ansprüche,
**dadurch gekennzeichnet, dass**
beim Aufbringen des Ni - Basislots ein zweilagiges Lot - Band (14) verwendet wird, dessen äußere Lage (11) Hartstoffpartikel aufweist und dessen innere Lage (12) zur Anordnung an der zu reparierenden Fläche keine Hartstoffpartikel umfasst.

6. Verfahren nach Anspruch 5,
**dadurch gekennzeichnet, dass**
die äußere Lage (11) des Lot - Bands 50 bis 30 Gew.%, vorzugsweise 45 bis 35 Gew.%, insbesondere ca. 40 Gew.% Hartstoffpartikel umfasst.

7. Verfahren nach einem der Ansprüche 3 bis 6,
**dadurch gekennzeichnet, dass**
das Lot - Band (6,14) oder die Lot - Folie mittels eines Bindemittels (13) oder einer Lot - Paste (5) auf der zu reparierenden Fläche aufgebracht werden und/oder mit Lot - Paste umgeben werden.

8. Verfahren nach einem der vorhergehenden Ansprüche,
**dadurch gekennzeichnet, dass**
vor der Wärmebehandlung eine Trocknung bei Temperaturen von 50°C bis 80°C, insbesondere 60°C bis 70°C an Luft erfolgt.

9. Verfahren nach einem der vorhergehenden Ansprüche,
**dadurch gekennzeichnet, dass**
die Wärmebehandlung eine Auslagerung bei einer Temperatur von 1150°C bis 1200°C, insbesondere von 1170°C bis 1180°C, für 10 bis 25 min, insbesondere 15 bis 20 min umfasst.

10. Verfahren nach einem der vorhergehenden Ansprüche,
**dadurch gekennzeichnet, dass**
die Wärmebehandlung eine Aufheizung unter Vakuumbedingungen mit einer Aufheizgeschwindigkeit von 5°C/min bis 30°C/min, insbesondere 10°C/min bis 20°C/min und/oder Zwischenauslagerungen bei Temperaturen zwischen 400°C bis 1100°C, insbesondere bei 450°C, 600°C und/oder 1050°C für eine Zeitdauer von 5 bis 40 min, insbesondere 10 bis 30 min umfasst.

11. Verfahren nach einem der vorhergehenden Ansprüche,
**dadurch gekennzeichnet, dass**
die Hartlegierung eine Co - Mo - Cr - Si - Legierung ist.

12. Bauteil einer Strömungsmaschine mit einer Reparaturschicht (15), die mit einem Verfahren nach einem der vorhergehenden Ansprüche hergestellt ist, wobei die Reparaturschicht eine Matrix aus einem Ni - Basis - Lot (7) umfasst, in welche Hartstoffpartikel (8) eingelagert sind, **dadurch gekennzeichnet, dass** die Hartstoffpartikel Hartlegierungen auf Basis von Kobalt oder Nickel umfassen.

## Claims

1. Method for repairing components (1, 10) of a turbomachine that are damaged by wear, in particular elements of a flow channel boundary, comprising the following method steps:
- preparing the surface that is to be repaired, in order to provide a smooth and clean surface (4), material on the surface to be repaired being removed during the preparation of the surface to be repaired, in particular by mechanical, chip-removing machining,
- applying a nickel-based brazing solder (7) having a proportion of hard material particles (8) to the surface (4) in order to form a repair layer (15),
- heat treating the component in order to braze the repair layer to the component under vacuum conditions, **characterized in that** the hard material particles comprise hard alloys based on cobalt or nickel.

2. Method according to any of the preceding claims, **characterized in that** irradiation using silicon carbide particles and/or nickel particles and/or a galvanic nickel coating takes place during the preparation of the surface to be repaired, in particular after material is removed.

3. Method according to either of the preceding claims, **characterized in that**, during the application of the nickel-based brazing solder (7), the brazing solder is applied in the form of a tape (6, 14) or a foil.

4. Method according to claim 3, **characterized in that** the brazing tape (6, 14) or the brazing foil are flexible and/or have multiple layers.

5. Method according to any of the preceding claims, **characterized in that**, during application of the nickel-based brazing solder, a two-layer brazing tape (14) is used, the outer layer (11) of which has hard material particles, and the inner layer (12) of which, for arranging on the surface to be repaired, does not comprise any hard material particles.

6. Method according to claim 5, **characterized in that** the outer layer (11) of the brazing tape comprises 50 to 30 wt.%, preferably 45 to 35 wt.%, in particular approximately 40 wt.% of hard material particles.

7. Method according to any of claims 3 to 6, **characterized in that** the brazing tape (6, 14) or the brazing foil are applied by means of a binder (13) or a brazing paste (5) to the surface to be repaired, and/or are surrounded by brazing paste.

8. Method according to any of the preceding claims, **characterized in that**, prior to the heat treatment, drying takes place at temperatures of 50°C to 80°C, in particular 60°C to 70°C in air.

9. Method according to any of the preceding claims, **characterized in that** the heat treatment comprises aging at a temperature of 1150°C to 1200°C, in particular of 1170°C to 1180°C, for 10 to 25 min, in particular for 15 to 20 min.

10. Method according to any of the preceding claims, **characterized in that** the heat treatment comprises heating under vacuum conditions, using a heating rate of 5°C/min to 30°C/min, in particular 10°C/min to 20°C/min, and/or intermediate aging at temperatures between 400°C and 1100°C, in particular at 450°C, 600°C and/or 1050°C for a period of 5 to 40 minutes, in particular 10 to 30 minutes.

11. Method according to any of the preceding claims, **characterized in that** the hard alloy is a Co-Mo-Cr-Si alloy.

12. Component of a turbomachine comprising a repair layer (15) which is produced using a method according to any of the preceding claims, the repair layer comprising a matrix made of a nickel-based brazing solder (7), in which matrix hard material particles (8) are embedded, **characterized in that** the hard material particles comprise hard alloys based on cobalt or nickel.

## Revendications

1. Procédé de réparation de composants (1, 10) d'une turbomachine endommagés par l'usure, en particulier d'éléments d'une paroi de canal d'écoulement, comprenant les étapes suivantes :
- préparation de la surface à réparer pour obtenir une surface (4) lisse et propre, le matériau étant éliminé de la surface à réparer lors de la préparation de celle-ci, en particulier par un usinage mécanique par enlèvement des copeaux,
- application d'une soudure de base au nickel (7) comportant une proportion de particules de matériau dur (8) sur la surface (4) pour former une couche de réparation (15),
- traitement thermique du composant pour souder la couche de réparation au composant dans des conditions sous vide, **caractérisé en ce que** les particules de matériau dur comprennent des alliages durs à base de cobalt ou de nickel.

2. Procédé selon l'une des revendications précédentes, **caractérisé en ce que**, lors de la préparation de la surface à réparer, en particulier après l'élimination de matériau, une irradiation par des particules de carbure de silicium et/ou par des particules de nickel et/ou un revêtement galvanique de nickel est effectuée.

3. Procédé selon l'une des revendications précédentes, **caractérisé en ce que**, lors de l'application de la soudure de base au nickel (7), la soudure est appliquée sous la forme d'une bande (6,14) ou d'une feuille.

4. Procédé selon la revendication 3, **caractérisé en ce que** la bande de soudure (6,14) ou la feuille de soudure est flexible et/ou est réalisée en plusieurs couches.

5. Procédé selon l'une des revendications précédentes, **caractérisé en ce que**, lors de l'application de la soudure de base au nickel, une bande de soudure (14) à deux couches, dont la couche extérieure (11) comporte des particules de matériau dur et la couche intérieure (12) destinée à être disposée au niveau de la surface à réparer ne comporte pas de particules de matériau dur, est utilisée.

6. Procédé selon la revendication 5, **caractérisé en ce que** la couche extérieure (11) de la bande de soudure comprend 50 à 30 % en poids, de préférence 45 à 35 % en poids, en particulier environ 40 % en poids de particules de matériau dur.

7. Procédé selon l'une des revendications 3 à 6, **caractérisé en ce que** la bande de soudure (6, 14) ou la feuille de soudure est appliquée sur la surface à réparer et/ou entourée de pâte de soudure au moyen d'un liant (13) ou d'une pâte de soudure (5).

8. Procédé selon l'une des revendications précédentes, **caractérisé en ce que**, avant le traitement thermique, un séchage est effectué à l'air libre à des températures comprises entre 50 et 80 °C, en particulier entre 60 et 70 °C.

9. Procédé selon l'une des revendications précédentes, **caractérisé en ce que** le traitement thermique comprend une élimination de couche à une température comprise entre 1 150 et 1 200°C, en particulier entre 1 170 et 1 180 °C, pendant 10 à 25 minutes, en particulier pendant 15 à 20 minutes.

10. Procédé selon l'une des revendications précédentes, **caractérisé en ce que** le traitement thermique comprend un chauffage dans des conditions sous vide à une vitesse de chauffage comprise entre 5 et 30 °C/min, en particulier entre 10 à 20 °C/min et/ou des éliminations de couches intermédiaires à des températures comprises entre 400 et 1 100 °C, en particulier à 450 °C, 600 °C et/ou à 1 050 °C pendant 5 à 40 minutes, en particulier entre 10 à 30 minutes.

11. Procédé selon l'une des revendications précédentes, **caractérisé en ce que** l'alliage dur est un alliage Co-Mo-Cr-Si.

12. Composant d'une turbomachine comportant une couche de réparation (15) réalisée par un procédé selon l'une des revendications précédentes, la couche de réparation comprenant une matrice d'une soudure de base au nickel (7), dans laquelle des particules de matériau dur (8) sont incorporées, **caractérisé en ce que** les particules de matériau dur comprennent des alliages durs à base de cobalt ou de nickel.
